Europäisches Patentamt

European Patent Office

Office européen des brevets

(11) Veröffentlichungsnummer: **0 319 742 B1**

(12) **EUROPÄISCHE PATENTSCHRIFT**

(45) Veröffentlichungstag der Patentschrift: **12.08.92**

(51) Int. Cl.5: **H01M 2/02**, B29C 53/58

(21) Anmeldenummer: **88118932.8**

(22) Anmeldetag: **14.11.88**

(54) **Isolationshülse für galvanische Primärelemente und Herstellungsverfahren.**

(30) Priorität: **11.12.87 DE 3742027**

(43) Veröffentlichungstag der Anmeldung:
**14.06.89 Patentblatt 89/24**

(45) Bekanntmachung des Hinweises auf die
Patenterteilung:
**12.08.92 Patentblatt 92/33**

(84) Benannte Vertragsstaaten:
**BE CH DE ES FR GB GR IT LI NL SE**

(56) Entgegenhaltungen:
**DE-A- 1 956 779**
**US-A- 3 090 824**
**US-A- 3 695 971**

(73) Patentinhaber: **VARTA Batterie Aktiengesellschaft**
**Am Leineufer 51**
**W-3000 Hannover 21(DE)**

(72) Erfinder: **Rüggeberg, Klaus, Ing.(grad)**
**Einsteinstrasse 21**
**W-7090 Ellwangen(DE)**
Erfinder: **Jose, Horst-Udo, Dipl.Ing. (FH)**
**Bachstrasse 12**
**W-7188 Fichtenau-Unterdeufstetten(DE)**

(74) Vertreter: **Kaiser, Dieter Ralf, Dipl.-Ing.**
**Gundelhardtstrasse 72**
**W-6233 Kelkheim/Ts.(DE)**

## Beschreibung

Die Erfindung betrifft eine Isolationshülse für ein galvanisches Primärelement in Rundzellenform, welche aus einem einseitig mit Kunststoff kaschierten und gewickelten Papierband besteht, sowie ein Verfahren zu deren Herstellung.

Primärelemente sind in der Regel mit einem äußeren Blechmantel versehen, welcher teils eine Schutzfunktion wahrnimmt, teils auch dekorativen Zwecken sowie der erforderlichen Beschriftung mit Angaben der Batterieart, Batteriespannung, der Herstellerfirma usw. dient. Der metallische Mantel darf mit den übrigen metallischen Teilen des Elementes, soweit diese mit den elektrochemisch aktiven Elektrodensubstanzen in Verbindung stehen oder selbst einen Pol des Primärelementes bilden, keinen elektrischen Kontakt haben. Zu diesem Zweck wird bei Zink-Kohle-Primärelementen schon von Anfang an eine Isolationsschicht in Form eines zylindrischen Pappmantels verwendet, welcher die becherförmige negative Lösungselektrode vor Berührung mit dem Blechmantel schützt. Um einen Austritt von Zellelektrolyt zu verhindern, sind die Ränder des Blechmantels gegen eine Deckel- bzw. Bodenscheibe mittels Asphaltverguß oder Kunststoff abgedichtet.

Ein Nachteil solcher Anordnungen liegt sowohl in den Herstellungskosten als auch in der Dicke des Pappmantels, weil bei vorgegebenem Außendurchmesser des Primärelementes weniger Raum für das aktive Material übrig bleibt.

Einen relativ aufwendigen Ersatz für den Pappmantel stellt eine in der US-PS 2 802 042 beschriebene dreilagige Plastikhülle dar, die zusätzlich mit Kraftpapier oder imprägniertem Papier beidseitig laminiert ist und deren über die Becherelektrode hinausstehenden Ränder mit dem äußeren Metallmantel sowie einer Boden- bzw. Deckelplatte verfalzt sind.

Auf einfachere Weise hat man die Lagerfähigkeit und die Auslaufsicherheit von Rundzellen bei gleichzeitiger Isolation der Zinkanode durch Aufschrumpfen eines Kunststoffschlauches auf den Zinkbecher und Zusätzlichen Einsatz von Isolierscheiben oder -ringen zu verbessern gesucht.

Die Verwendung saugfähigen Isoliermaterials wie Pappe oder Papier ist jedoch vorteilhaft, weil es besonders geeignet ist, auch unmittelbar aus Wandporen eines bereits stark korrodierten Zinkbechers austretende Elektrolytflüssigkeit zu absorbieren. Dabei kann man im Interesse einer möglichst rationellen Herstellung der Papierhülse auf ein Arbeitsprinzip zurückgreifen, nach dem bereits Separatorhülsen in verschiedensten Varianten gefertigt wurden, nämlich deren Wicklung aus Endlosbahnen von Vliesstoffen, Cellulosederivaten und dergl., die gegeneinander verklebt werden, mit Hilfe von Spiralwickelmaschinen, z. B. gemäß DE-PS 25 49 515.

Solche Verfahren zur Herstellung von Hülsen sind auch aus der Verpackungsindustrie bekannt, wo die Schraubenwickel- und Hülsenverschlußtechnik vielfache Anwendung finden.

Der DE-OS 1 956 779 läßt sich eine Elektrodenhülse für ein rundes galvanisches Primärelement entnehmen, die komplett mit einer umgebenden Schutzhülle gefertigt ist, indem beispielsweise Zinkband auf einen Wickeldorn schraubenförmig aufgerollt und dieses unter gleichzeitigem Verkleben mit einer Doppelbahn aus Papier umwickelt wird.

Indessen hat die Erfahrung gelehrt, daß auch spiralgewickelte Isolationshülsen nach dem gegenwärtigen Fertigungsstand nicht imstande sind, über die Lösungsanode partiell austretenden Elektrolyt hinreichend zurückzuhalten bzw. zu binden, da es sich bei ihnen um keine vollkommen abgeschlossene Isolatorschicht handelt. Offenbar können selbst ausgedehnte Klebeflächen innerhalb eines Wickels nicht verhindern, daß Elektrolyt über Kriechpfade an den äußeren Blechmantel der Zelle gelangt und Korrosionsströme den Kapazitätsverfall beschleunigen.

Der Erfindung liegt die Aufgabe zugrunde, eine Isolationshülse für die Lösungselektrode eines runden galvanischen Primärelements anzugeben, die in einfacher Wickeltechnik herstellbar ist und neben zuverlässiger elektrischer Isolierung die Fähigkeit einer vollkommenen Elektrolytabdichtung besitzt.

Die Aufgabe wird erfindungsgemäß mit den in den unabhängigen Ansprüchen angegebenen Mitteln gelöst.
Bevorzugte Ausführungsformen der Erfindung sind in den Unteransprüchen angegeben.

Es ist möglich, ein Papierband parallel so auf einen Dorn zu wickeln, daß die umgefaltete Längskante bei der fertigen Hülse parallel zur Hülsenachse liegt. Bevorzugt wird jedoch ein schraubenförmiges oder spiraliges Wickeln. Weiter unten ist daher die Herstellung der Hülse durch ein schraubenförmiges Wickeln näher erläutert.

Die Verbindung der umgefalteten Längskante mit dem Rand der Gegenseite erfolgt bevorzugt durch ein thermisches Verschweißen der Kunststoffkaschierung, kann gegebenenfalls aber auch durch Ultraschallschweißung oder durch Verkleben erfolgen.

Eine Schweißverbindung zwischen den Windungen eines Papierbandes, welches nur auf einer Seite eine Kunststoffbeschichtung trägt, setzt bei nur einer Papierlage jedoch gegenseitige Kunststoffkontakte voraus. Erfindunggemäß kommen diese dadurch zustande, daß vor dem Auflaufen der Papierbahn auf einen Wickeldorn an ihrem einen Rand eine schmale Längskante endlos nach unten umgefaltet wird, bis sie, mit ihrer Kunststoffkaschierung nach außen, der Papierbahn-Unterseite anliegt. Auf diese Weise ist die Papierbahn im Bereich einer schmalen Randzone beidseitig mit Kunststoff bedeckt. Durch richtige Wahl des Auflaufwinkels und der Schraubungshöhe kann die randgefaltete Papierbahn nunmehr so auf den Wickeldorn aufgerollt werden, daß die umgeschlagene Längskante den Gegenrand der Papierbahn exakt und kontinuierlich überlappt. Es entsteht ein Hülsenrohr mit einer spiraligen Überlappungszone, in der zwei Kunststoffkaschierungen unmittelbar einander berühren und in einer Schweißnaht vereinigt werden können. Besonders vorteilhaft wird die Verschweißung der Papierbahn durch Erwärmen, beispielsweise Aufheizen der umgefalteten Papierlängskante unmittelbar vor dem Aufwickeln durch Heißluft, oder direkt auf dem Wickeldorn mittels Ultraschall vorgenommen.

In einer vorzugsweisen Ausführungsform der Erfindung kann die kunststoffverschweißte Isolationshülse auch nur die Außenhülle eines zwei-oder mehrlagigen Wickels sein, dessen innere Lagen aus gewöhnlichem Papierband bestehen. Die Hülse besitzt dadurch eine größere Festigkeit und ein besseres Saugvermögen.

In diesem Fall werden die Papierbahnen hintereinander, zuerst diejenigen aus dem gewöhnlichen Papier, schräg von unten, dann die kunststoffkaschierte Bahn schräg von oben auf den Wickeldorn aufgerollt. Zusätzlich werden die Bahnen untereinander verklebt.

Anhand einer Figur, die den Verfahrensablauf bei der Herstellung eines zweilagigen Hülsenwickels zeigt, wird die Erfindung verdeutlicht.

Einem feststehenden Wickeldorn 1 werden von Vorratsrollen eine erste gewöhnliche Papierbahn 2 als Endlosband und eine zweite Papierbahn 3, ebenfalls ein Endlosband, jedoch mit einer Kunststoffkaschierung 4 ihrer Oberseite, hintereinander in schrägem Winkel zugeführt.

Die Kunststoffschicht von Papierbahn 3 kann aus unterschiedlichsten siegelbaren Materialien bestehen, unter denen Polyolefine (PE, PP), Ethylen-Copolymerisate, Ionomere, Ethylenvinylacetat-Copolymerisate (PVA) und Polyvinylchlorid (PVC) nur eine typische Auswahl darstellen. Mit diesen Kunststoffen kaschiertes Papierband ist auch handelsüblich.

Vor dem Aufwickeln hat Papierbahn 3 bereits eine im vorderen Teil der Figur dargestellte Vorbehandlung durchlaufen.

Sie beginnt damit, daß nahe dem linken Rand und parallel zu diesem verlaufend mittels einer Falzvorrichtung 5 eine Falzlinie 6 in der durchlaufenden Papierbahn erzeugt wird. Mit dieser Maßnahme soll das spätere endlose Umfalten einer schmalen Papierlängskante 10 vorbereitet und erleichtert werden.

Als nächster Schritt folgt eine Klebemittelbeschichtung der Papierbahn-Unterseite aus einem Leimbehälter 7 mittels Auftragswalze 8.

Die Papierbahn mit beleimter Unterseite 9 passiert darauf einen oder mehrere Finger 11, welcher die Umfaltung der Längskante 10 bewirkt.

Nach dem Passieren des Fingers liegt die umgefaltete Papierlängskante an der Papierbahn-Unterseite, Klebeschicht gegen Klebeschicht an, während ihre Kunststoffkaschierung nach außen weist.

Damit ist jetzt an der Unterseite der Papierbahn neben einer breiten Klebeschicht-Zone 12 eine schmale Randzone 13 mit einer Kunststoffoberfläche vorhanden. Diese liefert bei dem nunmehr beginnenden Wickelvorgang die Grundlage für eine Verschweißung der Papierbahn 3 entlang einer spiraligen Überlappungszone 14, die über eine passende Steigungshöhe der Schraubung so eingerichtet ist, daß sich der umgefaltete Rand der Papierbahn exakt und kontinuierlich über den unveränderten Rand an der Gegenseite der Papierbahn legt und somit zwei Kunststoffschichten in unmittelbaren Kontakt zueinander kommen.

Gleichzeitig zieht die zweite Papierbahn mit ihrer klebenden Unterseite auf die erste Papierbahn schraubenförmig auf.

Die Verschweißung der Kunststoffkaschierungen in der Überlappungszone wird bei dem gezeigten Beispiel durch zwei in unmittelbarer Nähe der Auflaufstelle der Papierbahn 3 befindliche Heißluftdüsen 15, 16 eingeleitet, von denen die eine auf die umgeschlagene Papierlängskante 10 und die andere auf den Gegenrand gerichtet ist. Es ist aber auch die direkte Verschweißung auf dem Wickeldorn mittels Ultraschall möglich.

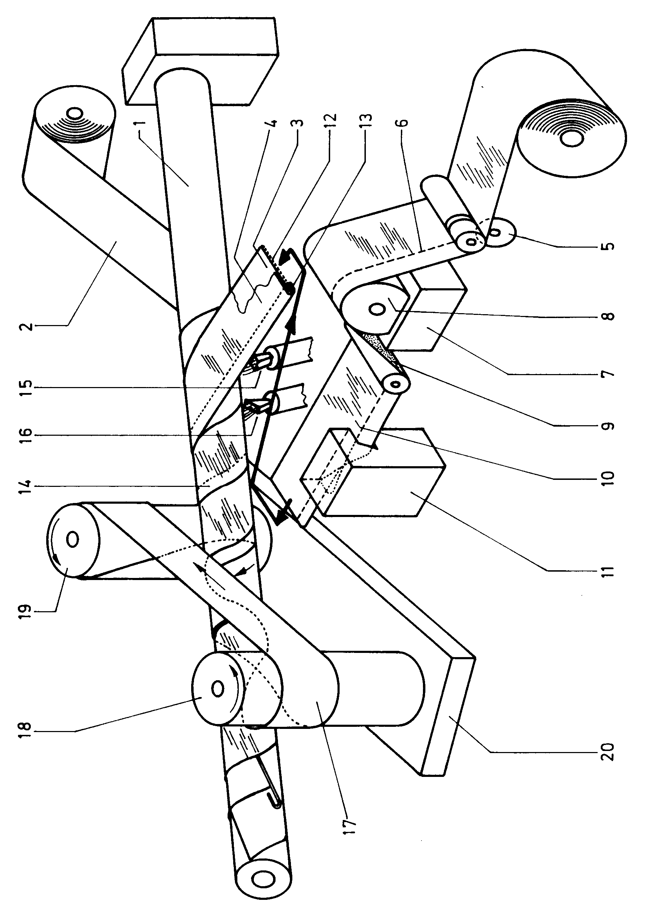

Auf die Verschweißung und Verklebung der schraubenförmig gewickelten Bandbahnen folgt deren Verfestigung und Verpressung zu einem Hülsenrohr unter dem Druck des umlaufenden Wickelriemens 17. Der Wickelriemen ist ein endloser Leder- oder Geweberiemen und wird durch die gegenüberliegenden Rollen 18, 19 angetrieben. Die Rollen sind auf einem Support 20 gelagert, welcher entsprechend der Wicklungssteigung schräg zum Wickeldorn verstellt werden kann. Durch die Schrägstellung und den Drehsinn des Wickelriemens wird dem Hülsenrohr der gewünschte Vortrieb erteilt. Dieses schiebt sich am Ende des Wickeldorns (in der Figur nicht dargestellt) über einen Beschneidedorn, der im Wickeldorn gelagert ist und sich in der gleichen Umfangsgeschwindigkeit der Schraubendrehung des Hülsenrohres dreht. An dem Beschneidedorn erfolgt schließlich die Auftrennung des Hülsenrohres in kurze Hülsen mittels Rollenmessern in an sich bekannter Weise, wie sie z.B. der Figur 1 der DE-OS 1 956 779 zu entnehmen ist.

Die fertige Isolationshülse wird nach der Montage am plus- und minus-seitigen Ende der Rundzelle abgeklemmt bzw. eingebördelt. Sie stellt so ein separates Dichtelement sowohl gegen austretenden Elektrolyten als auch gegen Austrocknung dar, was im Einzelfall auch zu einer verbesserten Lagerfähigkeit des Primärelementes führt.

Die erfindungsgemäße Hülse bietet den Vorteil der kontinuierlichen Herstellung bei geringen Herstellkosten durch Verwendung nur einer kunststoffbeschichteten Papierlage. Sie bewährleistet absolute Dichtigkeit durch deren Verschweißung zu einem geschlossenen, papiergefütterten Kunststoffschlauch, welcher aus der Lösungsanode austretende Elektrolytmengen bindet und andererseits die feuchte Papierschicht nach außen hin abschirmt. Mit den verwendeten Papierbahnen werden deren Elektrolytsaugfähigkeit und elektrisches Isoliervermögen im Hinblick auf die Plus-und Minuskontakte maximal genutzt.

**Patentansprüche**

1. Isolationshülse in einem galvanischen Primärelement in Rundzellenform, welche aus einem einseitig mit Kunststoff kaschierten und gewikkelten Papierband besteht, dadurch gekennzeichnet, daß eine Papierbahn (3) mit einer Kunststoffbeschichtung (4) ihrer Oberseite und einer nach unten gegen die Unterseite endlos umgefalteten Längskante (10) bei nach außen gekehrter Kunststoffbeschichtung so aufgewickelt ist, daß sich die umgefaltete Papierbahnlängskante und der Rand der Gegenseite der Papierbahn überlappen, wobei die umgefaltete Papierlängskante auf dem Rand der Gegenseite aufliegt, und daß die Papierbahnwindungen über die Kunststoffbeschichtungen in der Überlappungszone (14) verbunden sind.

2. Isolationhülse nach Anspruch 1, dadurch gekennzeichnet, daß die Papierbahn schraubenförmig gewickelt ist.

3. Isolationshülse Anspruch 1 oder 2, dadurch gekennzeichnet, daß die kunststoffbeschichtete Papierbahn (3) auf einen ein- oder mehrlagigen Spiralwickel aus gewöhnlichen Papierbahnen (2) aufgewickelt und über den größeren Teil (12) ihrer Unterseite mit der unterliegenden Papierbahn (2) verklebt ist.

4. Verfahren zur Herstellung einer Isolationshülse nach Anspruch 1, dadurch gekennzeichnet, daß im kontinuierlichen Durchlauf von einer nur einseitig mit einer Kunststoffkaschierung versehenen Papierbahn (3) eine schmale Papierlängskante (10) endlos gegen die Papierbahn - Unterseite umgefaltet wird, daß die Papierbahn darauf mit der Kunststoffbeschichtung nach außen auf einen Wickeldorn (1) so aufgerollt wird, daß sich die umgefaltete Papierlängskante und der Rand der Gegenseite der Papierbahn überlappen, wobei die umgefaltete Papierlängskante auf dem unveränderten Rand der Gegenseite aufliegt, daß die Papierbahnwindungen entlang der Randüberlappung verbunden werden und daß das so gebildete Hülsenrohr über einem Beschneidedorn durch Rollenmesser in Einzelhülsen aufgetrennt wird.

5. Verfahren nach Anspruch 4, dadurch gekennzeichnet, daß die Papierbahn (3) schraubenförmig aufgerollt wird.

6. Verfahren zur Herstellung einer Isolationshülse nach Anspruch 3, dadurch gekennzeichnet, daß im kontinuierlichen Durchlauf auf die Unterseite einer nur oberseitig mit Kunststoff kaschierten Papierbahn (3) eine Klebstoffschicht (9) aufgebracht wird, daß von der Papierbahn eine schmale Papierlängskante (10) endlos gegen die beleimte Papierbahn-Unterseite umgefaltet wird, daß darauf hintereinander eine gewöhnliche Papierbahn (2) und die randgefaltete kunststoffkaschierte Papierbahn mit der Kunststoffbeschichtung nach außen auf einen Wikkeldorn (1) mit solcher Steigung schraubenförmig aufgerollt werden, daß sich die umgefaltete Papierlängskante und der Rand der Gegenseite der Papierbahn (3) überlappen, wobei die umgefaltete Papierlängskante auf dem unveränderten Rand der Gegenseite aufliegt, während die klebende Unterseite der kunststoffkaschierten Papierbahn auf der gewöhnlichen Papierbahn aufzieht, daß die kunststoffkaschierte Papierbahn entlang ihrer Randüberlappung verbunden wird und daß das so gebildete zweilagige Hülsenrohr unter dem Druck eines umlaufenden Wickelriemens verfestigt und verpreßt und darauf über einen Beschneidedorn durch Rollenmesser in Einzelhülsen getrennt wird.

7. Verfahren nach einem der Ansprüche 4 bis 6, dadurch gekennzeichnet, daß in die verwendete kunststoffkaschierte Papierbahn (3) noch vor der Klebstoffbeschichtung zur Erleichterung der endlosen Umfaltung der Papierlängskante im kontinuierlichen Durchlauf eine randnahe Falzlinie (6) eingeformt wird.

8. Verfahren nach einem der Ansprüche 4 bis 7, dadurch gekennzeichnet, daß die kunststoffkaschierte Papierbahn (3) über ihre umgefaltete Papierlängskante (10) und den Gegenrand entlang der Überlappung durch thermisches Verschweißen verbunden wird.

9. Verfahren nach Anspruch 8, dadurch gekennzeichnet, daß zur Verschweißung zumindest die umgefaltete Papierlängskante der auf den Wickeldorn auflaufenden kunststoffkaschierten Papierbahn (3) mittels Heißluft erhitzt wird.

10. Verfahren nach einem der Ansprüche 4 bis 7, dadurch gekennzeichnet, daß das Verbinden der kunststoffkaschierten Papierbahn entlang der spiraligen Randüberlappung direkt auf dem Wickeldorn mittels Ultraschall erfolgt.

**Claims**

1. Insulating sleeve in a galvanic primary element in the form of a round cell, which insulating sleeve comprises a wound paper tape laminated on one side with plastics, characterized in that a paper web (3) having a plastics coating (4) on its upper side and a longitudinal edge (10) folded around endlessly downwards towards the underside is wound up with the plastics coating turned outwards such that the folded-around paper web longitudinal edge and the margin of the other side of the paper web overlap, with the folded-around paper longitudinal edge lying on the margin of the other side, and in that the paper web windings are bonded by way of the plastics coatings in the overlapping zone (14).

2. Insulating sleeve according to Claim 1, characterized in that the paper web is wound helically.

3. Insulating sleeve according to Claim 1 or 2, characterized in that the plastics-coated paper web (3) is wound onto a single- or multi-ply spiral roll comprising conventional paper webs (2) and is stuck over the greater part (12) of its underside to the underlying paper web (2).

4. Process for manufacturing an insulating sleeve according to Claim 1, characterized in that, in continuous operation, of a paper web (3) provided only on one side with plastics lamination, a narrow paper longitudinal edge (10) is folded endlessly around towards the paper web underside, in that the paper web is then rolled up with the plastics coating outwards onto a winding mandrel (1) in such a way that the folded-around paper longitudinal edge and the margin of the other side of the paper web overlap, with the folded-around paper longitudinal edge lying on the unaltered margin of the other side, in that the paper web windings are connected along the margin overlap, and in that the sleeve tube thus formed is separated into individual sleeves over a cutting mandrel by roller blades.

5. Process according to Claim 4, characterized in that the paper web (3) is rolled up helically.

6. Process for manufacturing an insulating sleeve according to Claim 3, characterized in that, in continuous operation, an adhesive layer (9) is applied to the underside of a paper web (3) laminated only on the upper side with plastics, in that of the paper web a narrow paper longitudinal edge (10) is folded around endlessly towards the glued paper web underside, in that a conventional paper web (2) and the margin-folded plastics-laminated paper web with the plastics coating outwards are then rolled helically one after the other onto a winding mandrel (1) with a pitch such that the folded-around paper longitudinal edge and the margin of the other side of the paper web (3) overlap, the folded-around paper longitudinal edge lying on the unaltered margin of the other side, while the adhesive underside of the plastics-laminated paper web attaches to the conventional paper web, in that the plastics-laminated paper web is connected along its margin overlap, and in that the two-ply sleeve tube thus formed is solidified and compressed under the pressure of a rotating winding belt, and is then separated into individual sleeves over a cutting mandrel by roller blades.

7. Process according to one of Claims 4 to 6, characterized in that a fold line (6) near the margin is formed in the plastics-laminated paper web (3) used before the adhesive coating, to facilitate the endless folding around of the paper longitudinal edge in continuous operation.

8. Process according to one of Claims 4 to 7, characterized in that the plastics-laminated paper web (3) is bonded by way of its folded-around paper longitudinal edge (10) and the other margin along the overlapping by heat fusing.

9. Process according to Claim 8, characterized in that, for fusing, at least the folded-around paper longitudinal edge of the plastics-laminated paper web (3) running onto the winding mandrel is heated by means of hot air.

10. Process according to one of Claims 4 to 7, characterized in that the plastics-laminated paper web is bonded along the spiral margin overlapping directly on the winding mandrel by means of ultrasound.

**Revendications**

1. Manchon isolant sur un élément galvanique primaire en forme de pile ronde, qui est constitué par une bande de papier doublée sur une face avec de la matière plastique et enroulée, manchon isolant caractérisé en ce qu'une bande de papier (3) avec un revêtement en matière plastique (4) de sa face supérieure et un bord longitudinal (10) replié en continu vers le bas contre sa face inférieure, avec le revêtement en matière plastique tourné vers l'extérieur, est enroulée de façon que le bord longitudinal replié de la bande de papier et le bord du côté opposé de la bande de papier se chevauchent, tandis que le bord longitudinal replié du papier s'applique sur le bord du côté opposé, et en ce que les spires de la bande de papier sont reliées par l'intermédiaire des revêtements en matière plastique dans la zone de chevauchement (14).

2. Manchon isolant selon la revendication 1, caractérisé en ce que la bande de papier est enroulée en forme d'hélice.

3. Manchon isolant selon la revendication 1 ou la revendication 2, caractérisé en ce que la bande de papier (3) revêtue de matière plastique est enroulée sur un enroulement en hélice de bande de papier usuelle (2) et est collée sur la majeure partie (12) de sa face inférieure avec la bande de papier (2) placée en dessous.

4. Procédé pour la fabrication d'un manchon isolant selon la revendication 1, procédé caractérisé en ce qu'au cours du déplacement continu d'une bande de papier (3) munie sur une face seulement d'un doublage en matière plastique, un étroit bord longitudinal (10) du papier est replié en continu contre la face inférieure de la bande de papier, en ce que la bande de papier est ensuite, avec son revêtement en matière plastique enroulée sur un mandrin d'enroulement (1) vers l'extérieur, de façon que le bord longitudinal replié du papier et le bord du côté opposé de la bande de papier se chevauchent, cependant que le bord longitudinal replié du papier s'applique sur le bord non modifié du côté opposé, en ce que les spires de la bande de papier sont reliées le long du chevauchement des bords et en ce que le tube de manchon ainsi formé est tronçonné en manchons individuels par des molettes de coupe sur un mandrin de coupe.

5. Procédé selon la revendication 4, caractérisé en ce que la bande de papier (3) est enroulée en forme d'hélice.

6. Procédé pour fabriquer un manchon isolant selon la revendication 3, caractérisé en ce que, au cours du déplacement continu d'une bande de papier (3) doublée sur sa face supérieure seulement avec de la matière plastique, une couche de colle (9) est rapportée sur la face inférieure de cette bande, en ce qu'un étroit bord longitudinal (10) de la bande de papier est replié en continu contre la face inférieure encollée de la bande de papier, en ce qu'ensuite successivement, une bande de papier usuelle (2) et la bande de papier doublée de matière plastique et repliée en bordure avec le revêtement de matière plastique à l'extérieur sont enroulées en forme d'hélice sur un mandrin d'enroulement (1) et avec un pas tel que le bord longitudinal replié du papier et le bord du côté opposé de la bande de papier (3) se chevauchent, cependant que le bord longitudinal replié du papier s'applique sur le bord non modifié du côté opposé, tandis que la face inférieure collante de la bande de papier doublée de matière plastique, tire sur la bande de papier usuelle, en ce que la bande de papier doublée de matière plastique est soudée le long de son chevauchement en bordure et en ce que le tube de mandrin à deux couches ainsi formé est consolidé et comprimé sous la pression d'une courroie d'enroulement en rotation et est ensuite tronçonné en manchons individuels par des molettes de coupe sur un mandrin de coupe.

7. Procédé selon une des revendications 4 à 6, caractérisé en ce que sur la bande de papier avec doublage en matières plastiques utilisées (3), une ligne de pliage (6) est formée au voisinage du bord pendant le déplacement continu de cette bande, avant l'enduction avec de la colle, pour faciliter le rabattement en continu du bord longitudinal du papier.

8. Procédé selon une des revendications 4 à 7, caractérisé en ce que la bande de papier doublée de matières plastiques (3) est assemblée par soudage thermique le long du chevauchement sur le bord longitudinal replié (10) du papier et le bord opposé.

9. Procédé selon la revendication 8, caractérisé en ce que pour le soudage, au moins le bord longitudinal replié de la bande de papier doublée en matières plastiques (3) arrivant sur le mandrin d'enroulement, est chauffé par de l'air chaud.

10. Procédé selon une des revendications 4 à 7, caractérisé en ce que l'assemblage de la bande de papier doublée de matières plastiques le long du chevauchement hélicoïdal en bordure, s'effectue directement sur le mandrin d'enroulement au moyen d'ultrasons.